# EUROPÄISCHE PATENTSCHRIFT

(11) **EP 2 611 340 B1**
(45) Veröffentlichungstag und Bekanntmachung des Hinweises auf die Patenterteilung: **13.08.2014**
(21) Anmeldenummer: 11760999.0
(22) Anmeldetag: 29.08.2011
(51) Int. Cl.: A47J 31/36

(54) **BRÜHVORRICHTUNG MIT EINER KAPSELERKENNUNG**
BREWING APPARATUS WITH CAPSULE RECOGNITION
DISPOSITIF DE PERCOLATION À RECONNAISSANCE DE CAPSULE

(30) Priorität: 02.09.2010 DE 102010044249
(43) Veröffentlichungstag der Anmeldung: 10.07.2013
(73) Patentinhaber: Eugster/Frismag AG, 8580 Amriswil (CH)
(72) Erfinder: FISCHER, Daniel, 8590 Romanshorn (CH)
(74) Vertreter: Loock, Jan Pieter
(86) Internationale Anmeldenummer: PCT/EP2011/004324
(87) Internationale Veröffentlichungsnummer: WO 2012/028290

(56) Entgegenhaltungen:
- EP-A1- 0 208 092
- EP-A1- 1 495 702

## Beschreibung

Die vorliegende Erfindung betrifft eine Vorrichtung zur Herstellung von aufgebrühten Getränken mit einer Brüheinheit, die eine Brühkammer aufweist, in die durch einen Einwurfschacht eine Kapsel einführbar ist, wie im Dokument EP 0 208 092 offenbart.

Derartige Vorrichtungen sind aus dem Stand der Technik hinlänglich bekannt und werden beispielsweise zur Herstellung von Kaffee, Espresso, Cappuccino, Tee oder sonstigen Getränken aber auch Suppen, Fertiggerichten und dergleichen verwendet. Bei diesen Vorrichtungen wird eine Kapsel, die das jeweilige Rohmaterial, beispielsweise den gemahlenen Kaffee, aufweist von einer Flüssigkeit, insbesondere heißem Wasser, durchströmt und dabei wird das Getränkerohmaterial extrahiert und/oder aufgelöst und dadurch das herzustellende Getränk oder Lebensmittel zubereitet. Für derartige Vorrichtungen gibt es eine Vielzahl von Kapseln, wobei in der Regel nur eine bestimmte Kapsel für eine bestimmte Vorrichtung so geeignet ist, dass sichergestellt wird, dass weder die Vorrichtung noch der Benutzer zu Schaden kommt.

Es war deshalb die Aufgabe der vorliegenden Erfindung eine Vorrichtung zur Herstellung von aufgebrühten Getränken oder Lebensmitteln zur Verfügung zu stellen, bei der sichergestellt ist, dass diese nur mit dafür geeigneten Portionskapseln betrieben wird.

Gelöst wird die Aufgabe mit einer Vorrichtung zur Herstellung von aufgebrühten Getränken mit einer Brüheinheit, die eine Brühkammer aufweist, in die durch einen Einwurfschacht eine Kapsel einführbar ist, wobei in dem Einwurfschacht ein Mittel vorgesehen ist, das von der Kapsel, vorzugsweise rotativ, angetrieben wird und/oder das die Fallbewegung der Kapsel verändert.

Die vorliegende Erfindung betrifft eine Vorrichtung zur Herstellung von aufgebrühten Getränken, wie sie oben beschrieben ist. In dieser Vorrichtung werden vorzugsweise Einmalkapseln verwendet, die ein tiefgezogenes Basiselement mit einem Rand aufweisen. Dieser Rand dient in der Regel als Siegelfläche für eine Deckelfolie, die die Kapsel luft- und aromadicht verschließt, mit der die Kapsel, nach dem Befüllen mit dem Rohmaterial, verschlossen wird, um die Kapsel in einer bestimmten Lage zu halten, als Anschlagfläche, damit die Kapsel nicht zu tief in die Brühkammer hineinrutscht, als Dichtungsfläche und/oder als Angriffsfläche, um die Kapsel aus der Brühkammer zu entfernen. Vorzugsweise ist das Basiselement konisch gestaltet. Vorzugsweise ist der Rand kreisringförmig ausgebildet.

Die erfindungsgemäße Vorrichtung ist mit einer Brüheinheit versehen, die eine Brühkammer aufweist. In diese Brühkammer, die vorzugsweise zweiteilig vorgesehen ist, wobei die beiden Teile vorzugsweise relativ zueinander von einer geöffneten in eine geschlossene Stellung und umgekehrt überführbar sind, wird zur Herstellung des Getränks die Kapsel eingeführt, die das jeweilige Rohmaterial aufweist. Danach wird die Brühkammer vorzugsweise geschlossen, die Kapsel vorzugsweise geöffnet und von einer Flüssigkeit insbesondere heißem Wasser durchströmt und dabei das Getränk oder das Lebensmittel hergestellt. Anschließend wird die Brühkammer wieder geöffnet und die verbrauchte Kapsel durch einen Abfallschacht in einen Abfallbehälter entfernt, so dass die Brühkammer für die Herstellung eines weiteren Getränks oder Lebensmittels zur Verfügung steht.

Diese Vorrichtung weist nun erfindungsgemäß einen Einwurfschacht auf, der in der Regel vertikal ausgerichtet ist und durch den der Benutzer die Kapsel in einer bestimmten Lage in die geöffnete Brühkammer einführt. Erfindungsgemäß ist nun vorgesehen, dass in dem Einwurfschacht ein Mittel angeordnet ist, das von der Kapsel, vorzugsweise rotativ, angetrieben wird und/oder das die Fallbewegung der Kapsel verändert. Das Mittel bewirkt insbesondere, dass eine Kapsel, die zu groß ist, insbesondere deren Rand zu groß ist, in dem Einwurfschacht stecken bleibt und dadurch nicht in die Brühkammer gelangen kann. Das Mittel wirkt hierbei wie ein sich drehendes Schloss. Vorzugsweise ist die erfindungsgemäße Vorrichtung so ausgebildet, dass eine zu kleine Kapsel, insbesondere eine Kapsel mit einem zu kleinen Rand, zwar in den Einwurfschacht einführbar ist, sich in der Brühkammer jedoch nicht halten kann, so dass sie unmittelbar in einen Abfallbehälter fällt. Alternativ oder zusätzlich ist die Brüheinheit insbesondere die Pumpe, die das heiße Wasser zur Verfügung stellt, nicht in Betrieb nehmbar, wenn das Mittel nicht von der Kapsel angetrieben worden ist. Dadurch werden zusätzlich Sicherheitsrisiken vermieden.

Vorzugsweise wird das Mittel von der Kapsel in Rotation versetzt oder das Mittel lenkt die Kapsel aus ihrer senkrechten Flugbahn ab. Erfolgt eine derartige Rotationsbewegung nicht und/oder wird die Kapsel nicht aus ihrer senkrechten Flugbahn abgelenkt, so bleibt sie entweder in dem Einwurfschacht stecken und/oder sie fällt durch die Brühkammer hindurch.

Vorzugsweise wirkt das Mittel, das in dem Einwurfschacht vorgesehen wird, reib- und/oder formschlüssig mit der Kapsel zusammen. Ganz besonders bevorzugt wirkt das Mittel mit dem Rand der Kapsel zusammen. Dafür weist der Rand der Kapsel vorzugsweise komplementäre Reib- und/oder Formschlussmittel auf. Erst durch den Reib- oder Formschluss wird das rotierende Mittel angetrieben und ermöglicht dadurch, dass die Kapsel durch den Einwurfschacht in die Brühkammer fallen kann. Vorzugsweise ist an dem rotierenden Mittel ein Geber angeordnet, der mit einer Steuerung verbunden ist. Dieser Geber stellt eine Bewegung des Mittels insbesondere eine Rotationsbewegung fest und sendet ein entsprechendes Signal an die Steuerung. Vorzugsweise gibt die Steuerung die Brüheinheit insbesondere die Pumpe der Brüheinheit nur dann frei, wenn eine bestimmte Bewegung des Mittels detektiert wurde.

Vorzugsweise handelt es sich bei dem Mittel um ein Ritzel, das besonders bevorzugt im Randbereich des Einwurfschachts angeordnet ist und das Zähne mit einer beliebigen Anzahl und/oder einer beliebigen Form aufweist. Vorzugsweise wirkt dieses Ritzel mit einem Zahnkranz zusammen, der an der Kapsel, insbesondere am Rand der Kapsel, vorgesehen ist, wobei der Zahnkranz bei der Fallbewegung der Kapsel mit mindestens einem, vorzugsweise mindestens zwei Zähnen des Ritzels formschlüssig zusammenwirkt. Die Zähne des Ritzes und des Zahnkranzes müssen, wie bei einem Getriebe aufeinander abgestimmt sein, damit sie sich gemeinsam formschlüssig bewegen können. Ist dies nicht der Fall blockiert die Kapsel in dem Einwurfschacht.

Vorzugsweise besteht die Brühkammer aus einem ersten und einem zweiten Teil, wobei an einem Teil mindestens ein vorzugsweise zwei Haltearme vorgesehen sind, die zumindest teilweise insbesondere mit der Stirnseite des Zahnkranzes haltend zusammenwirken und dadurch verhindern, dass die Kapsel in einen Abfallbehälter fällt bevor sie zur Getränk- oder Lebensmittelherstellung eingesetzt worden ist. Bei einer zu kleinen Kapsel wirken diese Haltearme jedoch nicht haltend, so dass die Kapsel unmittelbar nachdem sie in die geöffnete Brühkammer eingeführt worden ist in den Abfallbehälter fällt, bevor diese geschlossen werden kann. Dadurch wird sichergestellt, dass auch zu kleine Kapseln nicht in der erfindungsgemäßen Vorrichtung verwendet werden können, so dass auch diesbezügliche Sicherheitsrisiken ausscheiden. Vorzugsweise sind die Haltemittel so ausgebildet, dass sie die Kapsel zwischen sich zentrieren und eine Lehre für die Kapselkofiguration bilden. Durch diese Ausführungsform ist insbesondere sichergestellt, dass eine zu kleine Kapsel, insbesondere eine Kapsel mit einem zu kleinen Rand, nicht in der Brühkammer gehalten wird sondern sich sicher aus der Brühkammer herausdreht.

Im Folgenden wird die Erfindung anhand der Figuren 1 - 9 erläutert. Diese Erläuterungen sind lediglich beispielhaft und schränken den allgemeinen Erfindungsgedanken nicht ein.
**Figuren 1 und 2** zeigen eine erste Ausführungsform der erfindungsgemäßen Vorrichtung.
**Figuren 3 bis 5** zeigen weitere Ausführungsformen der erfindungsgemäßen Vorrichtung.
**Figuren 6** bis **9** zeigen die Kapsel in der Brühkammer.

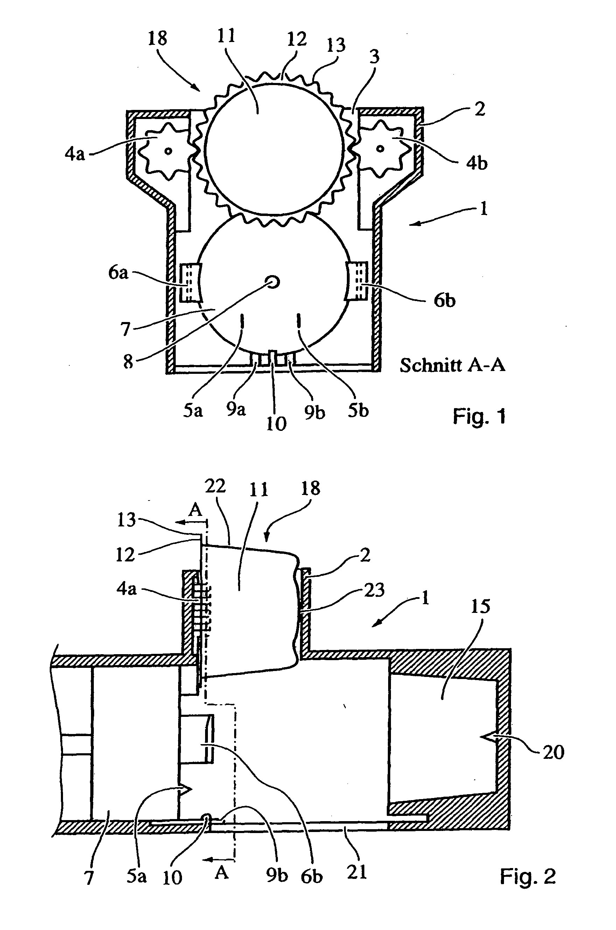

**Figuren 1** und **2** zeigen eine erste Ausführungsform der Vorrichtung zur Herstellung von aufgebrühten Getränken. In dieser Vorrichtung werden Kapseln 11 verwendet. die ein konisches Basiselement 22, das das Rohmaterial enthält und einen Rand 12 aufweist. Das Basiselement 22 wird in der Regel mit einer Deckelfolie verschlossen, die insbesondere an dem Rand 12 befestigt, vorzugsweise angesiegelt wird. mit Die Vorrichtung weist eine Brüheinheit 1 auf. die im Wesentlichen aus einer Brühkammer 7, 15 besteht. Die Brühkammer weist ein erstes Teil 7 und ein zweites Teil 15 auf, die relativ zueinander beweglich vorgesehen sind, so dass die Brühkammer von einem geöffneten, in Figur 2 dargestellten, Zustand in einen geschlossenen Zustand überführbar Ist. In dem vorliegenden Fall ist der zweite Teil der Brühkammer 15 ortsfest vorgesehen und der erste Teil kann, belspielswelse angetrieben durch einen Kniehebel, in Richtung des zweiten Teils 15 verschoben werden, um die Brühkammer zu schließen. Während des Schließens und/oder nachdem die Brühkammer 7, 15 geschlossen worden ist, wird der Kapselboden 23 mit einem Aufstechmittel 20, hier einem Aufstechdorn, und die Deckelfolie mit einem Öffnungsmittel, beispielsweise mit einem Öffnungsmesser 5a, 5b, vorzugsweise geöffnet, damit die Kapsel 11 von einer Flüssigkeit insbesondere heißem Wasser durchströmt werden kann. Die Kapsel kann aber auch schon vor dem Einführen in den Einwurfschacht entsprechende Öffnungen zumindest teilweise aufweisen. Das Wasser strömt dabei durch eine Wasserzufuhr 8 in die Kapsel insbesondere durch deren Deckel hinein und verlässt die Kapsel in deren Bodenbereich 23. Bevor der erste Teil der Brühkammer 7 in Richtung des zweiten Teils der Brühkammer verschoben wird, wird eine Kapsel 11, die das Getränkerohmaterial enthält durch einen Einwurfschacht 18 in die Brüheinheit eingeworfen. Die Kapsel wird dabei durch eine Einwurfschachtöffnung 3 eingeführt und dann durch das Einwurfschachtgehäuse 2 so geführt, dass es bei seiner Fallbewegung in die Brühkammer die in Figur 2 gezeigte Lage beibehält. Insbesondere weist das Einwurfschachtgehäuse dafür einen Schlitz auf, der den Rand 12 der Kapsel in mindestens einer, vorzugsweise zwei Raumrichtungen führt. Nachdem die Kapsel den Einwurfschacht 18 passiert hat, fällt sie in die Brüheinheit 1 und ihre Fallbewegung wird durch die Kapseldurchfallsperre 10, die an der Brüheinheit oder an dem ersten Teil 7 vorgesehen ist, unterbrochen. Um zu verhindern, dass sich die Kapsel aufgrund ihres Schwerpunkts von dem ersten Teil 7 der Brühkammer im Uhrzeigersinn wegdreht und in den Abfallschacht 21 fällt, sind an dem ersten Teil 7 Haltemittel 6a, 6b vorgesehen, die mit dem Rand 12 der Kapsel zusammenwirken und diese Bewegung verhindern. Sobald die Kapsel 11 auf der Kapseldurchfallsperre 10 aufsitzt und an den Haltemitteln 6a, 6b anliegt, kann der erste Teil 7 der Brühkammer in Richtung des zweiten Teils 15 der Brühkammer transportiert werden und die Kapsel dabei mitnehmen. Während dieses Transports liegt die Kapsel dann vorzugsweise nicht mehr auf der Kapseldurchfallsperre 10 sondern vorzugsweise auf den Kapseltransportauflagen 9a, 9b auf. Mittels des ersten Teils 7 wird die Kapsel dann in den zweiten Teil 15 eingeführt und die beiden Teile 7, 15 dichtend miteinander verschlossen. Sodann oder dabei kann die Kapsel geöffnet und die Herstellung des Getränks oder des Lebensmittels erfolgen. Nachdem der Brühvorgang abgeschlossen ist, wird die Brühkammmer wieder geöffnet und das Teil in seine ursprüngliche Position verfahren. Dabei nimmt es die verbrauchte Kapsel eine kurze Wegstrecke mit. Sobald sich die Kapsel zumindest teilweise über dem Abfallschacht 21 befindet, fällt sie dort hinein.

Erfindungsgemäß ist nun vorgesehen, dass in dem Einwurfschacht 18 ein Mittel, hier zwei Ritzel 4a, 4b vorgesehen sind, deren Zähne so ausgebildet sind, dass sie mit einem Zahnkranz 13, der an dem Kapselrand vorgesehen ist, formschlüssig so zusammenwirken, dass sie beim Fallen der Kapsel von dieser drehend angetrieben werden. Weist die Kapsel keine derartigen Zähne auf und/oder sind die Zähne bezüglich ihrer Anzahl und/oder Form nicht mit den Zähnen der Ritzel 4a, 4b kompatibel, so wird die Kapsel in dem Einwurfschacht stecken bleiben und es wird damit verhindert, dass eine Kapsel, die zu einer Gefährdung der erfindungsgemäßen Vorrichtung oder des Benutzers führen könnte, nicht in die Brühkammer eingeführt werden kann. Zahnkranz 13 und Ritzel 4a, 4b sind vorzugsweise so aufeinander abgestimmt, dass mindestens zwei Zähne des Ritzels mit dem Zahnkranz in Eingriff gelangen. Ist der Kapselrand 12 hingegen so klein, dass er mit den Zähen 4a, 4b nicht in Eingriff gerät und diese nicht drehend antreibt, so wirkt der Rand auch nicht mit den Kapselhaltemitteln 6a, 6b zusammen, so dass die Kapsel unmittelbar nachdem sie auf die Kapseldurchfallsperre 10 gestoßen ist, sich im Uhrzeigersinn drehen und in den Abfallschacht 21 fallen wird. Auch dadurch ist sichergestellt, dass die Vorrichtung nicht mit einer falschen Kapsel betrieben wird.

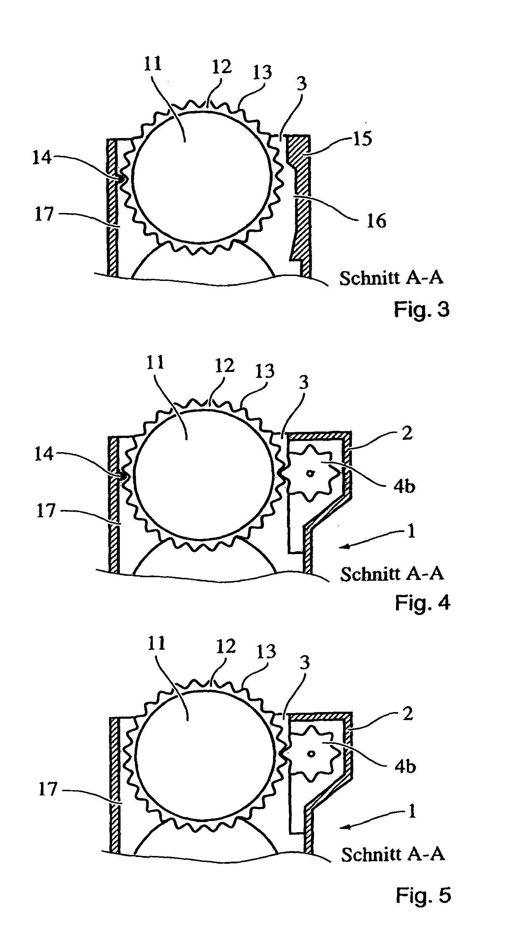

**Figur 3** zeigt eine weitere Ausführungsform der erfindungsgemäßen Vorrichtung. In dem vorliegenden Fall ist in dem Einwurfschacht 18 an dessen Innenwand 17 ein Sperrmittel 14 beispielsweise ein Sperrnocken vorgesehen, der mit dem Zahnkranz 13 des Kapselrands zusammenwirkt. Dadurch stößt die Kapsel auf dieses Sperrmittel 14 und wird dadurch in eine Drehbewegung versetzt und dreht sich entlang der Kapseleinwurfkontur 16 in den Einwurfschacht und damit in die Brühkammer hinein. Weist der Kapselrand hingegen keine Verzahnung auf, wird die Kapsel in dem Einwurfschacht stecken bleiben. Bezüglich einer zu kleinen Kapsel wird auf die Ausführungen gemäß den Figuren 1 und 2 verwiesen.

**Figur 4** zeigt im Wesentlichen die Ausführungsform der Vorrichtung gemäß Figur 3, wobei in dem vorliegenden Fall ein Ritzel 4b vorgesehen ist, das eine Einführung der Kapsel 11 in den Einwurfschacht verhindert, wenn der Zahnkranz 13 nicht mit den Zähnen des Ritzels 4b kompatibel ist. Bezüglich der Ausführung des Zahnkranzes 13 und den Zähnen des Ritzel 4b wird auf die Ausführungen zu den Figuren 1 und 2 verwiesen.

**Figur 5** entspricht im Wesentlichen der Ausführungsform gemäß Figur 1, aber nur mit einem Sperrritzel so dass auf die dort gemachten Ausführungen verwiesen wird. In dem vorliegenden Fall wurde das Sperrmittel 4a weggelassen.

Allen Ausführungsformen mit einem Ritzel 4a und/oder 4b ist gemeinsam, dass in der Regel spätestens wenn der Kapselrand mit einem Zahn des Ritzels in Eingriff ist und die Zähne des Ritzels und der Kapsel nicht kompatibel sind, eine Fallbewegung nicht zugelassen wird. Gleichsam muss es möglich sein, mindestens zwei Zähne des Ritzels in Eingriff mit dem Rand 13 der Kapsel zu bringen, damit die Kapsel durch den Einwurfschacht fallen und dabei das Ritzel antreiben kann. An dem Ritzel kann ein Geber vorgesehen sein, der dessen Drehbewegung erfasst und an eine Steuerung weiterleitet. Umfasst diese Drehbewegung mindestens ein vorgegebenes Kreissegment, schaltet die Steuerung beispielsweise die Brüheinheit frei. Der Fachmann erkennt, dass an dem Kapselrand auch Reibschlussmittel vorgesehen sein können, die reibschlüssig mit einem Mittel beispielsweise einem Rad zusammenwirken und dieses antreiben, wobei diese Bewegung wiederrum erfasst und dadurch die Brüheinheit freigeschaltet wird.

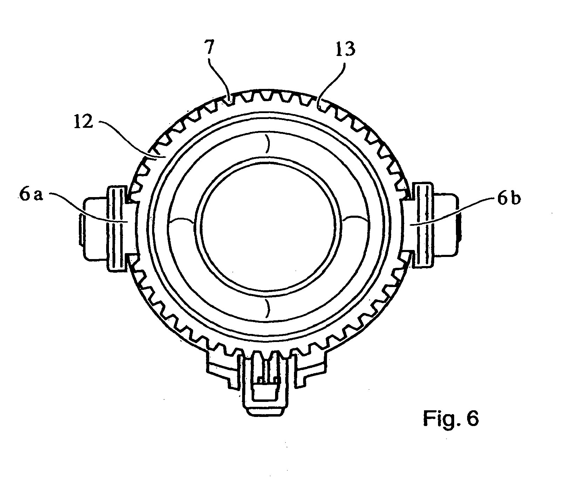

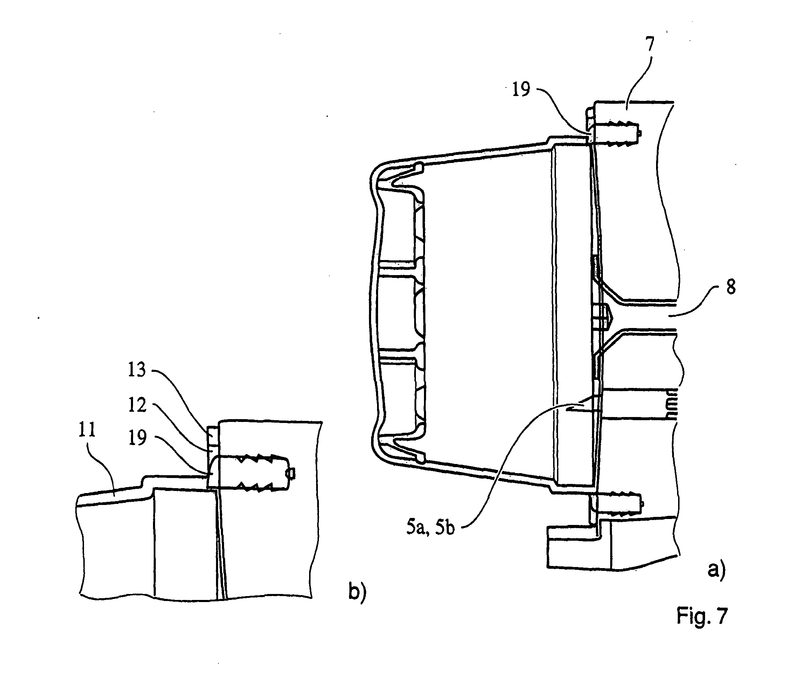

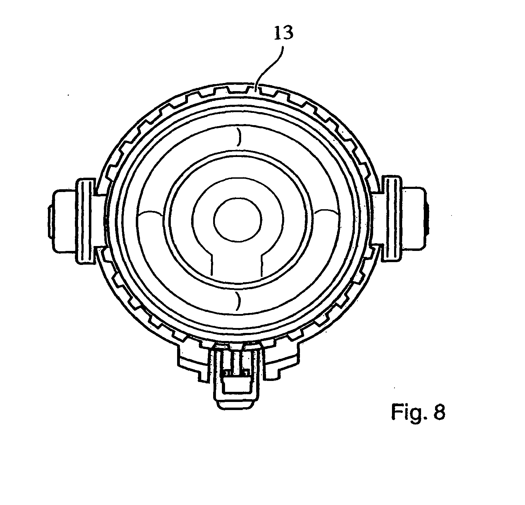

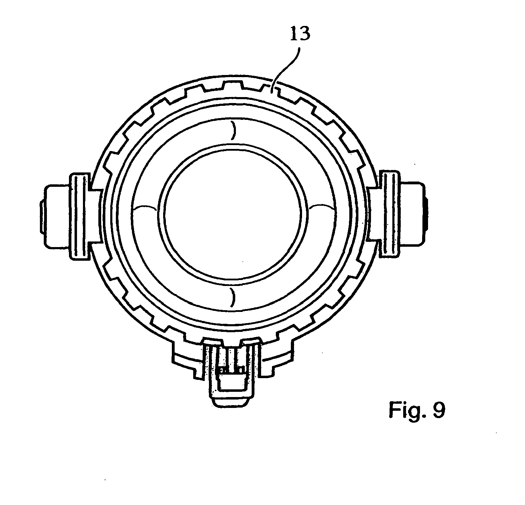

**Figuren 6 - 9** zeigen Kapseln mit unterschiedlichen Zahnkränzen 13 an ihrem Kapselrand 12. Bei der Ausführungsform gemäß Figur 6 weist der Zahnkranz 45 Zähne, bei der Ausführungsform gemäß Figur 8 29 Zähne und bei der Ausführungsform gemäß Figur 9 nur 22 Zähne auf. Es ist in den Figuren 6, 8 und 9 deutlich zu erkennen, dass die Haltemittel 6a, 6b mit dem Rand 12 der Kapsel 11, insbesondere mit dem Teil in dem der Zahnkranz 13 vorgesehen ist, zusammenwirkt. Ist dieser demnach nicht vorhanden, dreht sich die Kapsel aufgrund ihres Schwerpunktes aus der Papierebene heraus und fällt in den Abfallschacht 21. Wie insbesondere Figur 7 entnommen werden kann, ist an dem ersten Teil 7 der Brühkammer 7 eine Dichtung 19 vorgesehen, mit der sichergestellt wird, dass das Wasser, das aus der Wasserzuführung 8 kommt, in die Kapsel, durch die von den Öffnungsmitteln 5a, 5b gemachten Löchern, hinein und nicht außen herum strömt. Diese Dichtung 19 wirkt mit dem Teil des Randes 12 der Kapsel zusammen, der innenliegend von dem Zahnkranz 13 angeordnet ist.

### Bezugszeichenliste:

- 1: Brüheinheit
- 2: Einwurfschachtgehäuse
- 3: Einwurfschachtöffnung
- 4a: Formschlussmittel, Sperrmittel, Zahnrad
- 4b: Formschlussmittel, Sperrmittel, Zahnrad
- 5a: Öffnungsmittel, Aufstechmesser
- 5b: Öffnungsmittel, Aufstechmesser
- 6a: Kapsel-Haltemittel
- 6b: Kapsel-Haltemittel
- 7: erster Teil der Brühkammer, Transportmittel
- 8: Wasserzuführung
- 9a: Kapseltransportauflage
- 9b: Kapseltransportauflage
- 10: Kapseldurchfallsperre
- 11: Kapsel
- 12: Kapselrand
- 13: Form-/Reibschlussmittel, Zahnkranz
- 14: Sperrmittel, Sperrnocken
- 15: zweiter Teil der Brühkammer
- 16: Kapsel-Einwurfkontur, Einwurfkurve
- 17: Einwurfschachtinnenwand
- 18: Einwurfschacht
- 19: Dichtung
- 20: Aufstechdorn
- 21: Abfallschacht
- 22: Basiselement, konisches Basiselement
- 23: Kapselboden

## Patentansprüche

1. Vorrichtung zur Herstellung von aufgebrühten Getränken mit einer Brüheinheit (1), die eine Brühkammer (7, 8) aufweist, in die durch einen Einwurfschacht (18) eine Kapsel (11) einführbar ist, wobei in dem Einwurfschacht (18) ein Mittel (4a, 4b, 14) vorgesehen ist, das von der Kapsel (11), vorzugsweise rotativ, angetrieben wird und/oder das die Fallbewegung der Kapsel verändert **dadurch gekennzeichnet, dass** das Mittel (4a, 4b) ein Ritzel ist.

2. Vorrichtung nach Anspruch 1, **dadurch gekennzeichnet, dass** das Mittel (4a, 4b, 14) die Kapsel (11) in Rotation versetzt und/oder die Kapsel (11) aus ihrer senkrechten Flugbahn ablenkt.

3. Vorrichtung nach einem der voranstehenden Ansprüche, **dadurch gekennzeichnet, dass** die Kapsel (11) formschlüssig mit dem Mittel (4a, 4b, 14) zusammenwirkt.

4. Vorrichtung nach einem der voranstehenden Ansprüche, **dadurch gekennzeichnet, dass** das Mittel (4a, 4b, 14) mit dem Rand (12) der Kapsel (11) zusammenwirkt.

5. Vorrichtung nach einem der voranstehenden Ansprüche, **dadurch gekennzeichnet, dass** an dem Mittel (4a, 4b) ein Geber angeordnet ist, der mit einer Steuerung verbunden ist.

6. Vorrichtung nach einem der voranstehenden Ansprüche, **dadurch gekennzeichnet, dass** die Kapsel einen Zahnkranz (13) aufweist, der bei deren Fallbewegung mit mindestens zwei Zähnen des Ritzels (4a, 4b) formschlüssig zusammenwirkt.

7. Vorrichtung nach Anspruch 6, **dadurch gekennzeichnet, dass** die Brühkammer aus einem ersten und einem zweiten Teil (7, 8) besteht und das an einem Teil (7) mindestens ein Haltearm (6a, 6b) vorgesehen ist, der zumindest zeitweise mit der Stirnseite des Zahnkranzes (13) haltend zusammenwirkt.

## Claims

1. Apparatus for producing brewed beverages, having a brewing unit (1) which has a brewing chamber (7, 8), into which a capsule (11) can be introduced through an introduction shaft (18), wherein a means (4a, 4b, 14) is provided in the introduction shaft (18) and is driven, preferably rotatably, by the capsule (11) and/or changes the falling motion of the capsule, **characterized in that** the means (4a, 4b) is a pinion gear.

2. Apparatus according to Claim 1, **characterized in that** the means (4a, 4b, 14) rotates the capsule (11) and/or deflects the capsule (11) out of its vertical trajectory.

3. Apparatus according to one of the preceding claims, **characterized in that** the capsule (11) cooperates with the means (4a, 4b, 14) in a positively engaged manner.

4. Apparatus according to one of the preceding claims, **characterized in that** the means (4a, 4b, 14) cooperates with the edge (12) of the capsule (11).

5. Apparatus according to one of the preceding claims, **characterized in that** a sensor is arranged on the means (4a, 4b) and is connected to a control system.

6. Apparatus according to one of the preceding claims, **characterized in that** the capsule has a toothed rim (13) which cooperates in a positively engaged manner with at least two teeth of the pinion gear (4a, 4b) as the capsule falls.

7. Apparatus according to Claim 6, **characterized in that** the brewing chamber consists of a first and a second part (7, 8), and **in that** at least one holding arm (6a, 6b) is provided on one part (7), this arm cooperating, at least in part, with the outer face of the toothed rim (13) so as to hold it.

## Revendications

1. Dispositif de production de boissons infusées comprenant une unité de percolation (1) qui comprend une chambre de percolation (7, 8) dans laquelle une capsule (11) peut être insérée à travers un conduit d'introduction (18), un moyen (4a, 4b, 14) étant prévu dans le conduit d'introduction (18), lequel moyen est entraîné, de préférence en rotation, par la capsule (11) et/ou modifie le mouvement de chute de la capsule, **caractérisé en ce que** le moyen (4a, 4b) est un pignon.

2. Dispositif selon la revendication 1, **caractérisé en ce que** le moyen (4a, 4b, 14) déplace la capsule (11) en rotation et/ou détourne la capsule (11) de sa trajectoire verticale.

3. Dispositif selon l'une quelconque des revendications précédentes, **caractérisé en ce que** la capsule (11) coopère avec le moyen (4a, 4b, 14) par engagement par complémentarité de formes.

4. Dispositif selon l'une quelconque des revendications précédentes, **caractérisé en ce que** le moyen (4a, 4b, 14) coopère avec le bord (12) de la capsule (11).

5. Dispositif selon l'une quelconque des revendications précédentes, **caractérisé en ce qu'**un capteur est disposé sur le moyen (4a, 4b), lequel capteur est relié à une commande.

6. Dispositif selon l'une quelconque des revendications précédentes, **caractérisé en ce que** la capsule comprend une couronne dentée (13) qui, lors du mouvement de chute de la capsule, coopère par engagement par complémentarité de formes avec au moins deux dents du pignon (4a, 4b).

7. Dispositif selon la revendication 6, **caractérisé en ce que** la chambre de percolation est constituée d'une première et d'une deuxième partie (7, 8) et **en ce qu'**au moins un bras de retenue (6a, 6b) est prévu sur une partie (7), lequel coopère au moins temporairement avec le côté frontal de la couronne dentée (13) de manière à le retenir.
